# EUROPÄISCHE PATENTSCHRIFT

(11) **EP 0 756 821 B1**
(45) Veröffentlichungstag und Bekanntmachung des Hinweises auf die Patenterteilung: **14.03.2001**
(21) Anmeldenummer: 96111748.8
(22) Anmeldetag: 22.07.1996
(51) Int. Cl.: A01N 37/38, A01N 57/16, A01N 57/00, A01N 53/00, A01N 51/00, A01N 47/40, A01N 47/10, A01N 37/02

(54) **Para-Hydroxyphenylessigsäure zur Reduktion der Repellenz von Insektiziden**
Para-hydroxyphenylacetic acid for veducing the repellency of insecticides
Acide para-hydroxyphénylacétique pour réduire la répulsion des insectides

(30) Priorität: 02.08.1995 DE 19528306
(43) Veröffentlichungstag der Anmeldung: 05.02.1997
(73) Patentinhaber: BAYER AG, 51368 Leverkusen (DE)
(72) Erfinder: Justus, Karl, Dr., 51061 Köln (DE); Lenz, Jürgen Georg, Dr., 51373 Leverkusen (DE); Nentwig, Günther, Dr., 51381 Leverkusen (DE); Scherkenbeck, Jürgen, Dr., 42929 Wermelskirchen (DE); Dambach, Martin, Prof. Dr., 51399 Burscheid (DE); Wendler, Gernot, Prof. Dr., 50374 Erftstadt (DE)

(56) Entgegenhaltungen:
- EP-A- 0 588 203
- DATABASE WPI Section Ch, Week 7538 Derwent Publications Ltd., London, GB; Class C03, AN 75-63054W XP002041328 & JP 50 042 053 A (YAMABUN YUKA KK) , 16.April 1975
- J. ECON. ENTOMOL., Bd. 76, Nr. 4, August 1983, Seiten 752-756, XP002041326 E.P. WILEYTO & G. M. BOUSH: "Attraction of the German cockroach, Blattella germanica (Orthoptera: Blattellidae), to some volatile food components."
- J. ECON. ENTOMOL., Bd. 70, Nr. 1, Februar 1977, Seiten 34-38, XP002041327 M. K. RUST & D. REIERSON: "Using pheromone extract to reduce repellency of blatticides"

## Beschreibung

Die vorliegende Erfindung betrifft die neue Verwendung von para-Hydroxyphenylessigsäure alleine oder in Mischung mit anderen chemischen Verbindungen zur Reduktion der Repellenz von Insektiziden unter anderem bei der Bekämpfung von Schaben sowie Schabenbekämpfungsmittel, die para-Hydroxyphenylessigsäure sowie Mischungen dieser Carbonsäure mit anderen chemischen Verbindungen enthalten.

Schabenbefall stellt in Haushalt und Gewerbe ein erhebliches hygienisches Problem dar, das die Bekämpfung der Schaben in vielen Fällen erforderlich macht. Aufgrund ihrer Lebensweise sind Schaben jedoch schwer bekämpfbar. Ein besonderes Problem liegt dabei darin, daß viele Insektizide Repellenteigenschaften aufweisen, die den Bekämpfungserfolg herabsetzen.

M.K. Rust und D.A. Reierson (Journal of Economic Entomology 70 (1) (1977), 34-38) beschreiben die Verwendung von Schabenkotextrakt zur Verbesserung der Wirkung von Chlorpyrifos, Propoxur, Diazinon sowie Dri-die 67 und diskutieren diesen Effekt als eine Herabsetzung der Repellenz dieser Insektizide.

A.E. Glaser (International Pest Control 22 (1) (1980), 7-8, 21) beschreibt das gleiche Phänomen für Fenitrothion.

Für einen kommerziellen Einsatz ist das Verfahren jedoch nicht geeignet, da durch Extraktion von Schabenkot nur geringe Mengen an antirepellierender Substanz für Insektizide zur Verfügung gestellt werden können.

Es wurde nun überraschenderweise gefunden, daß die Verbindung para-Hydroxyphenylessigsäure der nachstehenden Formel (I) 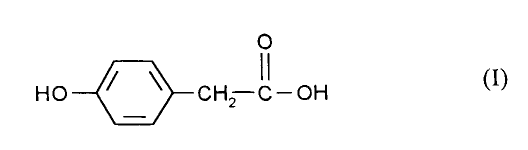 sowohl alleine, als auch in Mischungen mit anderen chemischen Verbindungen, ähnlich wie Schabenkotextrakt die Repellenz von Insektiziden vermindert, und somit sehr gut bei der Bekämpfung von Schaben eingesetzt werden kann.

Die EP-A 588 203 betrifft Mischungen mit Pheromon-ähnlichen Wirkungen enthaltend wenigstens eine Verbindung der Formel 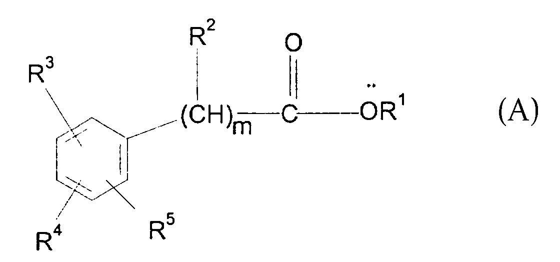 in welcher
- R¹: für Wasserstoff oder C₁-C₅-Alkyl steht;
- R²: für Wasserstoff oder C₁-C₅-Alkyl steht;
- R³: für Wasserstoff, Hydroxy oder C₁-C₅-Alkoxy steht;
- R⁴: für Wasserstoff, Hydroxy oder C₁-C₅-Alkoxy steht;
- R⁵: für Wasserstoff, Hydroxy, Amino oder C₁-C₅-Alkoxy steht; und
- m: für eine ganze Zahl von 0 bis 10 steht;
oder deren Salzen,
und
- a): wenigstens einer Verbindung der allgemeinen Formel II 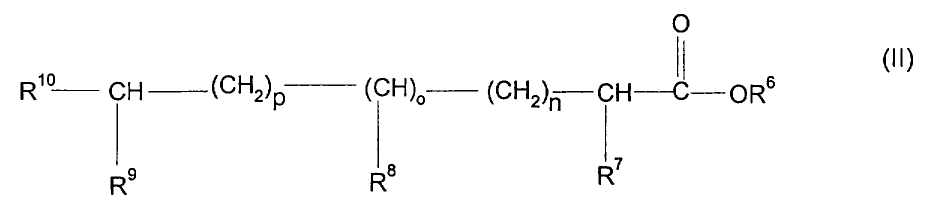
in welcher
- R⁶: für Wasserstoff, C₁-C₅-Alkyl oder für gegebenenfalls substituiertes Phenyl steht;
- R⁷: für Wasserstoff, Hydroxy oder C₁-C₅-Alkyl steht
- R⁸: für Wasserstoff oder C₁-C₅-Alkyl steht;
- R⁹: für Wasserstoff oder C₁-C₅-Alkyl steht;
- R¹⁰: für Wasserstoff, Carboxy, C₁-C₅-Alkoxycarbonyl oder gegebenenfalls substituiertes Phenoxycarbonyl steht;
- n: für eine ganze Zahl von 0 bis 20 steht;
- o: für 0 oder 1 steht; und
- p: für eine ganze Zahl von 0 bis 20 steht;
oder deren Salzen,
und/oder
- b): wenigstens einer Verbindung der allgemeinen Formel III 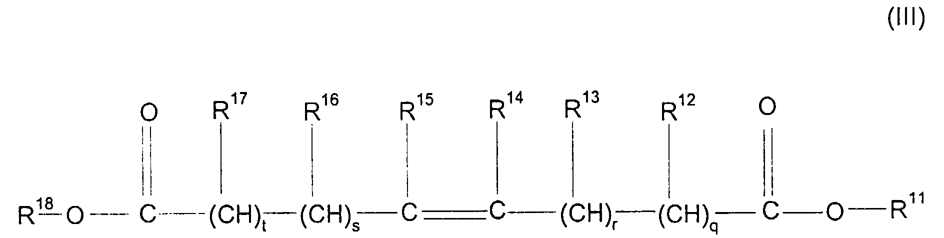
in welcher
- R¹¹: für Wasserstoff oder C₁-C₅-Alkyl oder für gegebenenfalls substituiertes Phenyl steht;
- R¹²: für Wasserstoff oder C₁-C₅-Alkyl steht;
- R¹³: für Wasserstoff oder C₁-C₅-Alkyl steht;
- R¹⁴: für Wasserstoff oder C₁-C₅-Alkyl steht;
- R¹⁵: für Wasserstoff oder C₁-C₅-Alkyl steht;
- R¹⁶: für Wasserstoff oder C₁-C₅-Alkyl steht;
- R¹⁷: für Wasserstoff oder C₁-C₅-Alkyl steht;
- R¹⁸: für Wasserstoff oder C₁-C₅-Alkyl oder für gegebenenfalls substituiertes Phenyl steht;
- q: für eine ganze Zahl von 0 bis 10 steht;
- r: für eine ganze Zahl von 0 bis 10 steht;
- s: für eine ganze Zahl von 0 bis 10 steht; und
- t: für eine ganze Zahl von 0 bis 10 steht;
oder deren Salzen

Diese Mischungen können bei der Bekämpfung von Schaben eingesetzt werden.

Die Formel (A) umfaßt zwar p-Hydroxy-phenylessigsäure, aber diese Verbindung wird weder in der Beschreibung noch in den Beispielen erwähnt.

Wie ein Vergleich der Spritzmittelwirkung zeigt, weist p-Hydroxy-phenylessigsäure trotz geringerer Aufwandmenge eine verbesserte Wirkung auf.

Die erfindungsgemäße antirepellierend wirkende p-Hydroxyphenylessigsäure (p = para) sowie Mischungen derselben mit anderen chemischen Verbindungen setzen gegenüber Schaben die Repellentwirkung von Insektiziden, insbesondere Pyrethroiden, herab und erhöhen daher die Wirkung von chemischen Insektenbekämpfungsmitteln.

Die Verbindung der Formel (I) ist bekannt, stabil und erfindungsgemäß alleine sowie in Mischungen mit anderen chemischen Verbindungen in chemischen Insektenbekämpfungsmitteln, bevorzugt in Köder- und Spritzmittelapplikationen, hochwirksam.

Die Verbindung der Formel (I) kann sowohl als Säure, als auch in Form ihrer Salze verwendet werden. Sie kann auch als Mischung ihrer freien Säure mit den jeweiligen Salzen verwendet werden.

Als Basen zur Herstellung der jeweiligen Salze der p-Hydroxyphenylessigsäure können alle in der Wirkstoffchemie üblichen Basen, vorzugsweise Alkali-, Erdalkali-, Ammonium-, Alkylammonium-, Dialkylammonium-, Trialkylammonium- oder Tetraalkylammoniumhydroxide, besonders bevorzugt Natrium-, Kalium-, Calcium- oder Ammoniumhydroxid und ganz besonders bevorzugt Natriumhydroxid verwendet werden.

Die Verbindung der Formel (I) und/oder ihre Mischungen mit anderen chemischen Verbindungen können erfindungsgemäß bei der Bekämpfung von Schaben, also Insekten der Ordnung Blattariae, insbesondere der Familie Blattellidae, vorzugsweise der Art Blattella germanica oder der Familie Blattidae, vorzugsweise der Arten Blatta orientalis und Periplaneta americana, aber auch gegen andere Schabenarten, ganz besonders bevorzugt jedoch gegen Blattella germanica, eingesetzt werden.

Die Verbindung der Formel (I) und/oder ihre Mischungen mit anderen chemischen Verbindungen wirken erfindungsgemäß auf die Schaben derart, daß die Repellentwirkung von Insektiziden, z.B. von Pyrethroiden, verringert wird.

Dieser Effekt tritt bei allen beweglichen Entwicklungsstadien (Larven, Adulte) der Schaben auf. Die para-Hydroxyphenylessigsäure und/oder ihre Mischungen mit anderen chemischen Verbindungen können somit ganz allgemein bei der Schabenbekämpfung, unabhängig von der Art der angewandten Bekämpfungsmethode eingesetzt werden. Sie kann bevorzugt bei chemischen Bekämpfungsverfahren und gegebenenfalls zusammen mit weiteren wirksamen Mitteln, wie anlockenden Ködermaterialien oder anderen Lockmitteln, synthetischen oder natürlichen Insektiziden usw. angewandt werden.

Dem Fachmann ist es anhand einfacher Überlegungen oder einfacher Untersuchungen leicht möglich, die für die jeweiligen Verwendungszwecke günstigen Mischungen sowie Anwendungsarten und Mengen zu ermitteln.

Vorzugsweise werden die p-Hydroxyphenylessigsäure und/oder ihre Mischungen mit anderen chemischen Verbindungen in den üblichen Spritzmitteln ausgebracht. Dabei können die üblichen Formulierungen verwendet werden, die mit den üblicherweise gebräuchlichen Applikationsgeräten ausgebracht werden können. Ebenso ist es möglich, die p-Hydroxyphenylessigsäure und/oder ihre Mischungen mit anderen chemischen Verbindungen gegebenenfalls in Mischung mit geeigneten Insektiziden, zu streufähigen Stäuben oder Granulaten zu formulieren. Die Aufwandmengen an p-Hydroxyphenylessigsäure und/oder ihren Mischungen mit anderen chemischen Verbindungen liegen vorzugsweise bei 0,1 bis 500 mg je m² und besonders bevorzugt bei 1 bis 200 mg je m² (bezogen auf die p-Hydroxy-phenylessigsäure).

Bei der Anwendung in einem Insektizide enthaltenden Köder wird die p-Hydroxy-phenylessigsäure und/oder ihre Mischungen mit anderen chemischen Verbindungen eingearbeitet oder in der Nähe des Ködermaterials (z.B. darüber) angebracht. Die p-Hydroxyphenylessigsäure und/oder ihre Mischungen mit anderen chemischen Verbindungen können auch in einer Form vorliegen, in der sie über einen längeren Zeitraum freigegeben werden (Slow-release-Formulierungen). Hierzu kann sie z.B. in Polymermaterial, Paraffinen, Wachsen usw. eingearbeitet werden oder mikroverkapselt vorliegen. Als Fallen können die üblichen Vorrichtungen dienen und als Ködermaterialien können übliche fraßattraktive Mittel dienen. Vorzugsweise werden die p-Hydroxyphenylessigsäure und/oder ihre Mischungen mit anderen chemischen Verbindungen in Mengen von 0,0001 bis 100 mg (ganz besonders bevorzugt 0,01 bis 20 mg) je Gramm Köder eingesetzt (bezogen auf p-Hydroxyphenylessigsäure).

Ebenfalls Teil der vorliegenden Erfindung sind Schabenbekämpfungsmittel, welche gegebenenfalls neben üblichen Träger- und Hilfsstoffen und/oder sonstigen Zusatzstoffen (wie Ködermittel, Lockstoffe) p-Hydroxyphenylessigsäure und/oder ihre Mischungen mit anderen chemischen Verbindungen und wenigstens einen insektizid wirksamen Stoff enthalten, wobei die p-Hydroxyphenylessigsäure und/oder ihre Mischungen mit anderen chemischen Verbindungen mit den übrigen Bestandteilen vermischt sein können, oder in einer separaten Anordnung vorliegen können.

Mit anderen chemischen Verbindungen sind besonders organische Carbonsäuren gemeint, insbesondere bevorzugt sind Benzoesäure, Phenylessigsäure, Anthranilsäure, (3-(m-Hydroxyphenyl)propionsäure, 3-(p-Hydroxyphenyl)propionsäure, 2-Hydroxypropionsäure, Caprinsäure, Palmitinsäure, Stearinsäure, Glutarsäure, Adipinsäure, Pimelinsäure, Suberinsäure, Azelainsäure, Methylpimelinsäure, Fumarsäure oder Maleinsäure.

Als insektizide Stoffe können alle Stoffe verwendet werden, die gegen Schaben wirksam sind, da es zu keiner unerwünschten Wechselwirkung zwischen den insektizid wirkenden Stoffen und der p-Hydroxyphenylessigsäure bzw. den erfindungsgemäßen Mischungen kommt.

Insektizid wirkende Stoffe können beispielsweise den insektizid wirkenden Phosphorsäureestern, Carbamaten, natürlichen Pyrethrinen und synthetischen Pyrethroiden, Amidinohydrazonen, Sulfuramiden, Nitroimino-, Nitromethylen-, Cyanoimino- oder Cyanomethylen-Verbindungen, Pyrrolidin-2,4-dion-Derivaten, Pyrazolin-Derivaten, Avermectin- und Ivermectinderivaten, Azadirachtrinen, Annoninen und/oder Ryanodinen angehören.

Genauso können Chitinsynthesehemmer (z.B. Triflumeron, Duflubenzuron, Lufenuron, Flufenoxuron u.a.) aber auch Juvenilhormone und deren Mimetika (z.B. Methoprene, Hydroprene, Fenoxycarb, Pyriproxyfen u.a.) oder "Hausmittel" (Borax, Hefe, Backpulver u.a.) verwendet werden.

Als erfindungsgemäß besonders bevorzugte insektizide Mischungspartner mit p-Hydroxyphenylessigsäure und/oder ihren Mischungen mit anderen chemischen Verbindungen seien aufgeführt:
1) Carbamidsäureester der Formel (II) 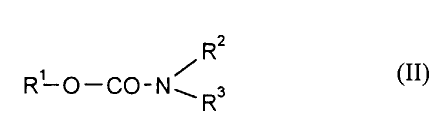 in welcher
   - R¹: für einen gegebenenfalls substituierten carbocyclischen oder heterocyclischen aromatischen Rest oder für einen gegebenenfalls substituierten Oximrest steht, wobei die weiter unten erläuterten Reste R¹ bevorzugt werden,
   - R²: für C₁-C₄-Alkyl steht und
   - R³: für Wasserstoff, C₁-C₄-Alkyl oder für einen Rest U steht, wobei
   - U: für den Rest -CO-R⁴ steht, worin
   R⁴ für Halogen, C₁-C₄-Alkyl, C₁-C₄-Alkoxy, C₃-C₅-Alkenoxy, C₃-C₅-Alkinoxy, C₁-C₄-Alkylthio, C₁-C₄-Alkylamino, Di-C₁-C₄-Alkylamino, C₁-C₄-Alkylhydroxylamino, für gegebenenfalls durch Halogen, Nitro, Cyano, Trifluormethyl, C₁-C₄-Alkyl, C₁-C₄-Alkoxy, C₁-C₄-Alkylendioxy, C₁-C₄-Alkylthio, C₁-C₄-Alkoxy-carbonyl substituiertes Phenoxy, Phenylthio oder Phenylamino, für 2,3-Dihydro-2,2-dimethyl-7-benzofuranyl oder für den Rest 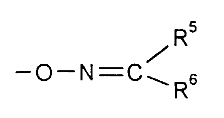 steht, worin
   R⁵ für Waserstoff, C₁-C₄-Alkyl oder Di-C₁-C₄-alkylamino-carbonyl steht und
   R⁶ für C₁-C₄-Alkyl, C₁-C₄-Alkylthio, Cyano-C₁-C₄-alkylthio, C₁-C₄-Alkylthio-C₁-C₄-alkyl steht, oder die beiden Reste R⁵ und R⁶ zusammen für gegebenenfalls durch Sauerstoff, Schwefel, SO oder SO₂ unterbrochenes C₂-C₈-Alkandiyl stehen, oder
   in welcher
   U für den Rest -Sᵥ(O)_{w}-R⁷ steht, worin
   v für 1 oder 2 und
   w für 0, 1 oder 2 stehen, wobei im Falle daß v für 2 steht, w 0 bedeutet,
   R⁷ für gegebenenfalls durch Halogen substituiertes C₁-C₄-Alkyl, C₃-C₅-Alkenyl, C₃-C₅-Alkinyl oder C₃-C₆-Cycloalkyl, für gegebenenfalls durch Halogen, Cyano, Nitro, Trifluormethyl, Trifluormethoxy, Trifluormethylthio, C₁-C₄-Alkyl oder C₁-C₄-Alkoxy substituiertes Phenyl, Benzyl oder Phenylethyl oder für den Rest 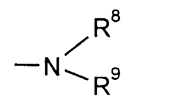 steht, worin
   R⁸ für C₁-C₄-Alkyl, C₃-C₅-Alkenyl, C₃-C₅-Alkinyl, C₃-C₆-Cycloalkyl oder Benzyl steht und
   R⁹ für C₁-C₄-Alkyl, C₃-C₅-Alkenyl, C₃-C₅-Alkinyl, C₃-C₆-Cycloalkyl, Benzyl, Phenylethyl, Halogencarbonyl, Formyl, C₁-C₄-Alkylcarbonyl, C₁-C₄-Alkoxy-carbonyl, C₁-C₄-Alkoxyphenoxycarbonyl, C₃-C₅-Alkinoxycarbonyl, C₃-C₅-Alkenoxycarbonyl, C₁-C₄-Alkylthiocarbonyl, C₁-C₄-Alkyl-amino-carbonyl, C₁-C₄-Alkyl-hydroxylamino-carbonyl, C₁-C₁₀-Alkyl-phenoxycarbonyl, Di-C₁-C₄-alkylaminocarbonyl, Phenylthiocarbonyl, Phenoxycarbonyl, 2,3-Dihydro-2,2-dimethyl-7-benzofuranyloxycarbonyl, für gegebenenfalls durch Halogen, Cyano, Nitro, Trifluormethyl, C₁-C₁₀-Alkyl oder C₁-C₄-Alkoxy substituiertes Phenylsulfenyl, Phenylsulfinyl, Phenylsulfonyl oder Phenyl steht, oder für den Rest 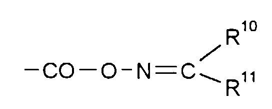 steht, worin
   R¹⁰ die oben für R⁵ angegebene Bedeutung und
   R¹¹ die oben für R⁶ angegebene Bedeutung hat, wobei ferner im Rest 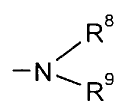 die Reste R⁸ und R⁹
   zusammen für eine gegebenenfalls durch Sauerstoff oder Schwefel unterbrochene Kohlenwasserstoffkette mit 3 bis 8 Kohlenstoffatomen stehen und worin weiter R⁷ auch für den gleichen Rest stehen kann, an den der Rest Sᵥ(O)_{w}-R⁷ gebunden ist.
   Als Wirkstoffkomponenten ganz besonders bevorzugt sind Carbamidsäureester der Formel II, in welcher
   - R¹: für gegebenenfalls durch C₁-C₄-Alkyl, C₂-C₄-Alkenyl, C₁-C₄-Alkoxy, C₁-C₄-Alkoxy-methyl, C₁-C₄-Alkylthio, C₁-C₄-Alkylthio-methyl, C₁-C₄-Alkylamino, Di-(C₁-C₄-alkyl)-amino, Di-(C₃-C₄-alkenyl)-amino, Halogen, Dioxolanyl, Methylendioxy und/oder durch den Rest -N=CH-N(CH₃)₂ substituierte Reste aus der Reihe Phenyl, Naphthyl, 2,3-Dihydro-7-benzofuranyl, Pyrazolyl oder Pyrimidinyl steht, oder in welcher
   - R¹: für einen Alkylidenaminorest der Formel 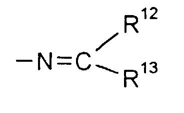 steht, in welcher
   R¹² und R¹³ die oben für R⁵ bzw. R⁶ angegebene Bedeutung haben,
   R² für C₁-C₄-Alkyl steht und
   R³ für Wasserstoff oder C₁-C₄-Alkyl (vorzugsweise für Wasserstoff) steht.

   Als Beispiele für die Carbamidsäureester der Formel (II) seien die folgenden N-Methylcarbamidsäureester genannt: 2-Methyl-phenyl-, 2-Ethylphenyl-, 2-iso-Propyl-phenyl-, 2-sec.-Butyl-phenyl-, 2-Methoxy-phenyl-, 2-Ethoxy-phenyl, 2-iso-Propoxy-phenyl-, 4-Methyl-phenyl-, 4-Ethyl-phenyl-, 4-n-Propyl-phenyl-, 4-Methoxy-phenyl-, 4-Ethoxy-phenyl-, 4-n-Propoxy-phenyl-, 3,4,5-Trimethyl-phenyl-, 3,5-Dimethyl-4-methylthio-phenyl-, 3-Methyl-4-dimethylaminophenyl-, 2-Ethylthiomethyl-phenyl-, 1-Naphthyl-, 2,3-Dihydro-2,2-dimethyl-7-benzofuranyl-, 2,3-(Dimethyl-methylendioxy)-phenyl-, 2-(4,5-Dimethyl-1,3-dioxolan-1 -yl)-phenyl-, 1-Methylthio-ethyliden-amino-, 2-Methylthio-2-methylpropylidenamino-, 1-(2-Cyano-ethylthio)-ethylidenamino- und 1 -Methylthiomethyl-2,2-dimethylpropyliden-amino-N-methyl-carbamidsäureester, wobei das 2-iso-Propoxy-phenyl-N-methylcarbamat bevorzugt wird.
2) Carbonsäureester der Formel (III) 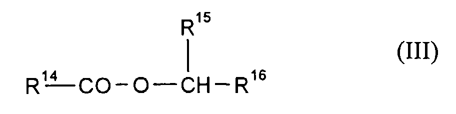 in welcher
   - R¹⁴: für einen offenkettigen oder cyclischen Alkylrest steht, der gegebenenfalls substituiert ist durch Halogen, Alkyl, Cycloalkyl, durch gegebenenfalls durch Halogen, Alkyl und/oder Alkoxy substituiertes Alkenyl, durch Phenyl oder Styryl, welche gegebenenfalls durch Halogen, gegebenenfalls Halogen-substituierte Reste aus der Reihe Alkyl, Alkoxy, Alkylendioxy und/oder Alkylthio substituiert sind, durch spirocyclisch verknüpftes, gegebenenfalls Halogen-substituiertes Cycloalk(en)yl, welches gegebenenfalls benzannelliert ist, in welcher weiter
   - R¹⁵: für Wasserstoff, Alkyl, Halogenalkyl, Alkenyl, Alkinyl oder Cyano steht, und
   - R¹⁶: für einen gegebenenfalls substituierten Alkyl- oder Arylrest oder für einen Heterocyclus steht, oder zusammen mit R¹⁵ und dem Kohlenstoffatom, an das beide Reste gebunden sind, einen Cyclopentenonring bildet.

   Ganz besonders als Wirkstoffkomponenten bevorzugt sind Carbonsäureester der Formel (III), in welcher
   (a) R¹⁴ für den Rest 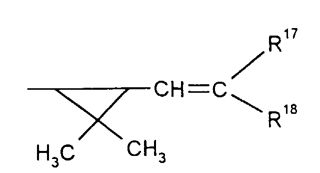 steht, worin
      - R¹⁷: für Wasserstoff, Methyl, Fluor, Chlor oder Brom und
      - R¹⁸: für Methyl, Fluor, Chlor, Brom, C₁-C₂-Fluoralkyl oder C₁-C₂-Chlorfluoralkyl oder für gegebenenfalls durch Halogen und/oder gegebenenfalls Halogen-substituierte Reste der Reihe C₁-C₄-Alkyl, C₁-C₄-Alkoxy, C₁-C₄-Alkylthio und/oder C₁-C₂-Alkylendioxy substituiertes Phenyl steht, oder worin beide Reste R⁷ und R⁸ für C₂-C₅-Alkandiyl (Alkylen) stehen;
      oder in welcher
   (b) R¹⁴ für den Rest 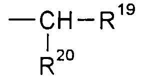 steht, worin
      - R¹⁹: für gegebenenfalls durch Halogen und/oder durch gegebenenfalls Halogen-substituierte Reste der Reihe C₁-C₄-Alkyl, C₁-C₄-Alkoxy, C₁-C₄-Alkylthio oder C₁-C₂-Alkylendioxy substituiertes Phenyl steht und
      - R²⁰: für Isopropyl oder Cyclopropyl steht;
      oder in welcher
   (c) R¹⁴ für Methyl oder einen der Reste 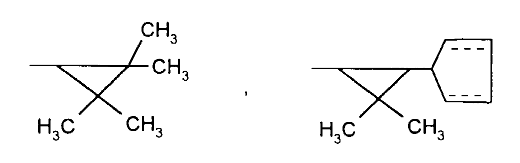 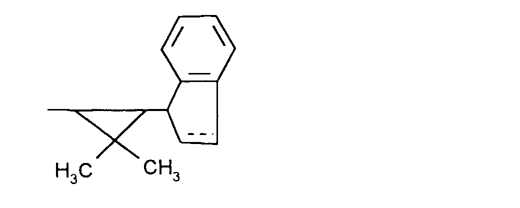 wobei die gepunkteten Linien mögliche Doppelbindungen andeuten sollen, steht,
   und in welcher
   - R¹⁴: für Wasserstoff, C₁-C₄-Alkyl, C₁-C₄-Halogenalkyl, Cyano oder Ethinyl steht und
   - R¹⁶: für die Reste der Reihe Phenyl, Furyl oder Tetrahydrophthalimido steht, wobei diese Reste substituiert sein können durch Halogen und/oder Reste der Reihe C₁-C₄-Alkyl, C₂-C₄-Alkenyl, C₁-C₄-Alkoxy, C₂-C₄-Alkenoxy, C₁-C₄-Alkylthio, C₁-C₂-Alkylendioxy, Phenoxy und/oder Benzyl, welche ihrerseits durch Halogen substituiert sein können und wobei R⁶ vorzugsweise für Tetrafluorphenyl, 3,4-Dichlorphenyl, Tetrahydrophthalimido oder für Phenoxy-phenyl steht, welches in einem oder beiden Phenylringen durch Halogen (vorzugsweise Fluor) substituiert sein kann.

   Weiterhin sind die natürlich vorkommenden Pyrethroide (wie Pyrethrum) oder synthetische Pyrethroide als Carbonsäureester der Formel (III) besonders bevorzugt.
   Als Beispiele für erfindungsgemäß besonders bevorzugte Carbonsäureester der Formel (III) seinen genannt
   2,2-Dimethyl-3-(2-methyl-propen-1-yl)-cyclopropan-carbonsäure-(3,4,5,6-tetrahydro-phthalimido-methyl)-ester, 2,2-Dimethyl-3-(2,2-dichlorvinyl)-cyclopropan-carbonsäure-(3-phenoxy-benzyl)-ester, 2,2-Dimethyl-3-(2,2-dichlorvinyl)-cyclopropancarbonsäure-(a-cyano-3-phenoxy-benzyl)-ester, 2,2-Dimethyl-3-(2,2-dichlorvinyl)-cyclopropan-carbonsäure-(a-cyano-4-fluor-3-phenoxy-benzyl)-ester, 2,2-Dimethyl-3-(2,2-dichlorvinyl)-cyclopropan-carbonsäure-(2,3,5,6-tetrafluor-benzyl)-ester, 2,2-Dimethyl-3-(2,2-dibromvinyl)-cyclopropancarbonsäure-(a-cyano-3-phenoxy-benzyl)-ester und 3-Methyl-2-(4-chlor-phenyl)-butansäure-(a-cyano-3-phenoxy-benzyl)-ester.
3) Phosphorsäure- und Phosphonsäureestern der allgemeinen Formel (IV) 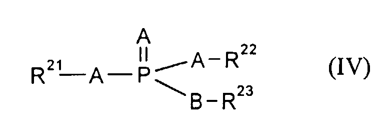 in welcher
   - A: gleich oder verschieden ist und für O oder S steht und
   - B: für O, S, -NH- oder für eine direkte Bindung zwischen dem zentralen P-Atom und R²³ steht und
   - R²¹ und R²²: gleich oder verschieden sind und für gegebenenfalls substituiertes Alkyl oder Aryl stehen,
   - R²³: für Wasserstoff, gegebenenfalls substituiertes Alkyl, Aryl, Heteroaryl, Aralkyl, Alkenyl, Dioxanyl oder einen Oximrest oder für den gleichen Rest steht, an den es gebunden ist.
   Besonders bevorzugt sind Phosphorsäure- und Phosphonsäureester der Formel (IV), in welcher
   - R²¹ und R²²: gleich oder verschieden sind und für C₁-C₄-Alkyl oder Phenyl stehen,
   - R²³: für Wasserstoff oder für Alkyl mit 1 bis 4 Kohlenstoffatomen steht, das gegebenenfalls durch Halogen, Hydroxyl, Cyano, gegebenenfalls Halogen-substituiertes Phenyl, Carbamoyl, Alkylsulfonyl, Alkylsulfinyl, Alkylcarbonyl, Alkoxy, Alkylthio, Alkoxycarbonyl, Alkylaminocarbonyl, letztere mit jeweils bis zu 6 Kohlenstoffatomen, substituiert ist, steht
   - R²³: weiterhin für Alkenyl mit bis zu 4 Kohlenstoffatomen, das gegebenenfalls durch Halogen-substituiertes Phenyl oder C₁-C₄-Alkoxy-carbonyl substituiert ist, steht, oder
   - R²³: für den Rest der allgemeinen Formel 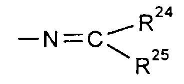 steht,
   wobei R²⁴ und R²⁵ die oben für R⁵ bzw. R⁶ angegebene Bedeutung besitzen, oder für Cyano oder Phenyl stehen,
   - R²³: ferner für Dioxanyl, das durch denselben Rest substituiert ist, an den R²² gebunden ist, oder R²³ für den gleichen Rest an den es gebunden ist steht, oder R²³ für Phenyl, das gegebenenfalls durch Methyl, Nitro, Cyano, Halogen und/oder Methylthio substituiert ist steht, wobei
   - R²³: außerdem besonders bevorzugt für gegebenenfalls durch C₁-C₄-Alkoxy, C₁-C₄-Alkylthiomethyl, C₁-C₄-Alkyl und/oder durch Halogen substituierte heteroaromatische Reste, wie Pyridinyl, Chinolinyl, Chinoxalinyl, Pyrimidinyl oder Benzo-1,2,4-triazinyl steht.
   Im einzelnen seien genannt:
   O,O-Dimethyl- bzw. O,O-Diethyl-O-(2,2-dichlor- bzw. 2,2-dibromvinyl)-phosphorsäureester,
   O,O-Diethyl-O-(4-nitro-phenyl)-thionophosphorsäureester,
   O,O-Dimethyl-O-(3-methyl-4-methylthio-phenyl)-thionophosphorsäureester,
   O,O-Dimethyl-O-(3-methyl-4-nitro-phenyl)-thionophosphorsäureester,
   O-Ethyl-S-n-propyl-O-(2,4-dichlorphenyl)-thionophosphorsäureester,
   O-Ethyl-S-n-propyl-O-(4-methylthio-phenyl)-thionophosphorsäureester,
   O,O-Dimethyl-S-(4-oxo-1,2,3-benzotriazin(3)yl-methyl)-thionothiolphosphorsäureester,
   O-methyl-O-(2-iso-propyl-6-methoxy-pyrimidin(4)yl)-thionomethanphosphonsäureester,
   O,O-Diethyl-O-(2-iso-propyl-6-methyl-pyrimidin(4)yl)-thionophosphorsäureester,
   O,O-Diethyl-O-(3-chlor-4-methyl-cumarin(7)yl)-thionophosphorsäureester,
   O,O-Dimethyl-2,2,2-trichlor-1-hydroxy-ethan-phosphonsäureester,
   O,O-Dimethyl-S-(methylaminocarbonyl-methyl)-thionophosphonsäureester,
   O-Methyl-O-(6-methoxy-2-tert-butyl-pyrimidin-4-yl)-thionoethan-phosphonsäure-diester.
4) Nitromethylen-, Nitroimino-, Cyanoimino- oder Cyanomethylen-Derivate der Formel (V) 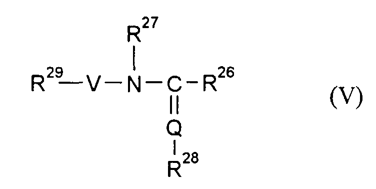 in welcher
   - R²⁶: für C₁-C₄-Alkyl (vorzugsweise für Methyl oder Ethyl) oder für die Gruppe 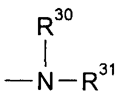 steht, in welcher
   R³⁰ C₁-C₄-Alkyl (vorzugsweise Methyl oder Ethyl) bedeutet oder
   R³⁰ gemeinsam mit R²⁷ eine gegebenenfalls verzweigte C₂-C₅-Alkandiyl-Kette (vorzugsweise -(CH₂)₂- oder -(CH₂)₃-) darstellt, und
   R³¹ Wasserstoff oder C₁-C₄-Alkyl (vorzugsweise Wasserstoff) bedeutet;
   R²⁷ für C₁-C₄-Alkyl (vorzugsweise Methyl oder Ethyl) steht oder gemeinsam mit R³⁰ eine gegebenenfalls verzweigte C₂-C₅-Alkandiyl-Kette (vorzugsweise -(CH₂)₂- oder -(CH₂)₃-) darstellt,
   R²⁸ für NO₂ oder CN steht;
   R²⁹ für einen gegebenenfalls substituierten (vorzugsweise durch Halogen und/oder C₁-C₄-Alkyl substituierten) heteroaromatischen Rest (vorzugsweise Pyridylrest) steht (wobei R²⁹ besonders bevorzugt für die 2-Chlorpyridyl-5-Gruppe steht);
   Q für =C- oder =N- steht; und
   V für eine direkte Bindung oder für einen C₁-C₃-Alkandiyl-Rest (vorzugsweise für -CH₂-) steht.

   Im folgenden werden beispielhaft einige besonders bevorzugte Verbindungen der Formel (V) speziell aufgeführt: 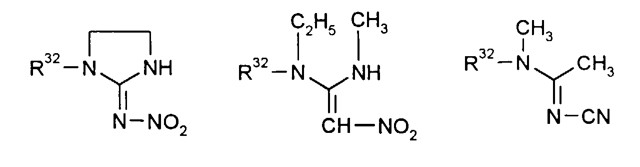 wobei R³² den 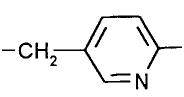 Cl-Rest bedeutet.

In den vorstehend aufgeführten allgemeinen Formeln und Restedefinitionen haben die Reste die folgenden allgemeinen sowie bevorzugten Bedeutungen:

Alkyl als solches oder als Bestandteil von Alkoxy oder Alkoxycarbonyl bedeutet geradkettiges oder verzweigtes Alkyl mit 1 bis 5, vorzugsweise 1 bis 4 und besonders bevorzugt 1 bis 3, Kohlenstoffatomen, wobei Methyl, Ethyl, n- und i-Propyl, n-, i-, s- und t-Butyl speziell genannt seien, wobei Methyl und Ethyl, insbesondere Methyl besonders hervorgehoben werden sollen.

Im gegebenenfalls substituierten Phenyl, Phenoxy oder Phenoxycarbonyl trägt der Phenylring vorzugsweise ein bis drei, besonders bevorzugt ein oder zwei Substituenten, die gleich oder verschieden sein können. Als Substituenten können alle in der Wirkstoffchemie üblichen Substituenten stehen. Als bevorzugte Substituenten seien aufgeführt: C₁-C₄-Alkyl, C₁-C₄-Alkoxy, C₁-C₄-Alkylthio, C₁-C₄-Halogenalkyl, C₁-C₄-Halogenalkoxy, Nitro, Hydroxy und Halogen (vorzugsweise Fluor, Chlor und/oder Brom).

Die p-Hydroxyphenylessigsäure und/oder ihre Mischungen mit anderen chemischen Verbindungen und/oder die insektiziden Stoffe sowie die Mischungen der p-Hydroxyphenylessigsäure und/oder ihre Mischungen mit anderen chemischen Verbindungen mit den insektiziden Stoffen können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Hilfs- und/oder Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxy-methylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen können im Falle von Köderformulierungen (vorzugsweise Streuköderformulierungen oder Festköderformulierungen) zusätzlich weitere Zusatzstoffe enthalten, die Schaben anlocken und/oder zur Aufnahme der insektiziden Stoffe veranlassen. Als Lockstoffe und Fraßstoffe können alle üblicherweise verwendeten Präparate verwendet werden, wie natürliche oder synthetische Geruchsstoffe und/oder Stoffe, die von Schaben gerne aufgenommen werden, wie stärke-, protein- und/oder zuckerhaltige Produkte auf Getreide- oder Zuckerbasis.

Die Formulierungen enthalten vorzugsweise 0,001 bis 95, insbesondere 0,01 bis 70 Gewichtsprozente p-Hydroxyphenylessigsäure und/oder ihrer Mischungen mit anderen chemischen Verbindungen.

Die Formulierungen enthalten (gegebenenfalls neben der p-Hydroxyphenylessigsäure und/oder ihrer Mischungen mit anderen chemischen Verbindungen), vorzugsweise zwischen 0,1 und 95, insbesondere 0,5 und 90 Gewichtsprozente insektizide Stoffe.

Die Anwendung der Schabenbekämpfungsmittel erfolgt in einer an die Anwendungsform angepaßten üblichen Weise.

Die biologische Wirksamkeit der p-Hydroxyphenylessigsäure und/oder ihrer Mischungen mit anderen chemischen Verbindungen soll anhand der folgenden Beispiele erläutert werden.

### Beispiel A

### Verbesserung einer Köderwirkung

In einem Raum (2,25 x 4,70 m) befinden sich in 2 gegenüberliegenden Ecken je ein Versteck sowie je eine Tränke, in den anderen Ecken je ein Stück Zwieback. Einen Tag nach Freilassen von 20 männlichen und 20 weiblichen Schaben (Blattella germanica) wird in 40 cm Wandabstand zum Zwieback je eine Köderdose mit einem insektizidhaltigen Fraßköder (insektizider Wirkstoff: 0,5 Gew.-% Ethylchlorpyrifos) aufgestellt.

Dieser Köder enthält entweder p-Hydroxyphenylessigsäure oder ist unbehandelt.

3 Räume werden jeweils mit behandelten Köderdosen und 3 mit unbehandelten Köderdosen besetzt.

An den folgenden 3 Tagen wird die Mortalität der männlichen und weiblichen Tiere bestimmt.

| **Testergebnis:** | | | |
|---|---|---|---|
| **Behandlungsart** | **% Mortalität nach** | | |
| | **1 d** | **2 d** | **3 d** |
| Kontrolle (nur Insektizid) | 22 | 42 | 52 |
| Insektizid + 10 mg p-Hydroxyphenylessigsäure | 46 | 58 | 63 |

### Beispiel B

### Verbesserung einer Spritzmittelwirkung im Labortest

Keramikkacheln werden mit einer wäßrigen Spritzbrühe besprüht, welche (a) den insektiziden Wirkstoff Cyfluthrin oder (b) Cyfluthrin und p-Hydroxyphenylessigsäure enthält, so daß die Aufwandmenge an Cyfluthrin 20 mg Wirkstoff je m² und die Aufwandmenge von p-Hydroxyphenylessigsäure 1 mg je m² beträgt.

Je eine dieser Kacheln wird in die Ecke eines Behälters (49 x 59 cm, Höhe 29,5 cm) gelegt, in dem sich eine Tränke, Futter, ein Versteck sowie 24 Stunden zuvor eingesetzte Männchen und Weibchen von Blattella germanica (je 5 Stück) befinden. Jeder Versuch besteht aus 5 Wiederholungen.

| **Testergebnis:** | | |
|---|---|---|
| **Behandlungsart** | **% Mortalität nach** | |
| | **1 d** | **2 d** |
| Kontrolle (nur Insektizid) | 32 | 44 |
| Insektizid + p-Hydroxyphenylessigsäure | 68 | 78 |

### Beispiel C

### Verbesserung einer Spritzmittelwirkung im Praxistest

In Australien wurde eine wäßrige Spritzbrühe verwendet, welche (a) den insektiziden Wirkstoff β-Cyfluthrin oder (b) β-Cyfluthrin und p-Hydroxyphenylessigsäure enthielt, so daß die Aufwandmenge an β-Cyfluthrin 6,25 mg Wirkstoff je m² (Hälfte der empfohlenen Menge) und die Aufwandmenge von p-Hydroxyphenylessigsäure 1 mg je m² beträgt.

Die Versuche fanden in Wohnungen mit schwierigsten hygienischen Bedingungen statt. Pro Präparat (β-Cyfluthrin oder β-Cyfluthrin und p-Hydroxyphenylessigsäure) wurden 7 bis 8 Einheiten behandelt. Die Wirksamkeit wurde durch die Auswertung von Klebfallenfängen vor und zu bestimmten Zeitpunkten nach der Behandlung ermittelt.

| **Testergebnisse:** | |
|---|---|
| **Behandlungsart** | **% Reduktion nach 7 Tagen** |
| Kontrolle (nur Insektizid) | 37 |
| Insektizid + p-Hydroxyphenylessigsäure | 65 |

## Patentansprüche

1. Verwendung von (i) p-Hydroxy-phenylessigsäure und/oder deren Salzen und/oder (ii) deren Mischungen aus anderen chemischen Verbindungen zur Reduktion der Repellenz von Insektiziden.

2. Insektizide Mittel enthaltend
A) 0.1 bis 95 Gew.-% Insektizid und
B) 0.001 bis 95 Gew.-% (i) p-Hydroxy-phenylessigsäure und/oder deren Salze und/oder (ii) deren Mischungen mit anderen Verbindungen wobei die repellierende Wirkung von Komponente A durch Komponente B reduziert wird.

3. Insektizide Mittel gemäß Anspruch 2, dadurch gekennzeichnet, daß sie neben para-Hydroxyphenylessigsäure und/oder deren Salze und/oder deren Mischungen mit anderen chemischen Verbindungen Carbamidsäureester, Carbonsäureester, Phosphonsäureester, Phosphonsäureester, Nitromethylen-, Nitroimino-, Cyanoimino- oder Cyanomethylen-Derivate enthalten.

4. Verfahren zur Herstellung von insektiziden Mitteln nach Anspruch 2, wonach man (i) p-Hydroxy-phenylessigsäure und/oder deren Salze und/oder (ii) deren Mischungen mit anderen chemischen Verbindungen mit Hilfs- und/oder Streckmitteln, gegebenenfalls unter Verwendung von oberflächenaktiven Mitteln, vermischt.

5. Verwendung von insektiziden Mitteln nach Anspruch 2 zur Bekämpfung von Schaben.

## Claims

1. Use of (i) p-hydroxy-phenylacetic acid and/or salts thereof and/or (ii) mixtures thereof with other chemical compounds for reducing the repellency of insecticides.

2. Insecticidal compositions, comprising
(A) from 0.1 to 95% by weight of insecticide and
(B) from 0.001 to 95% by weight of (i) p-hydroxy-phenylacetic acid and/or salts thereof and/or (ii) mixtures thereof with other compounds, where the repellent effect of component A is reduced by component B.

3. Insecticidal compositions according to Claim 2, characterized in that they comprise carbamic acid esters, carboxylic acid esters, phosphonic acid esters, phosphonic acid esters, nitromethylene, nitroimino, cyanoimino or cyanomethylene derivatives, in addition to para-hydroxyphenylacetic acid and/or salts thereof and/or mixtures thereof with other chemical compounds.

4. Process for preparing insecticidal compositions according to Claim 2, which comprises mixing (i) p-hydroxyphenylacetic acid and/or salts thereof and/or (ii) mixtures thereof with other chemical compounds with auxiliaries and/or extenders, if appropriate using surfactants.

5. Use of insecticidal compositions according to Claim 2 for controlling cockroaches.

## Revendications

1. Utilisation (i) de l'acide p-hydroxyphénylacétique et/ou de ses sels et/ou (ii) de ses mélanges avec d'autres composés chimiques pour réduire l'effet répulsif d'insecticides.

2. Compositions insecticides, contenant
A) 0,1 à 95 % en poids d'insecticide et
B) 0,001 à 95 % en poids (i) d'acide p-hydroxyphénylacétique et/ou de ses sels et/ou (ii) de ses mélanges avec d'autres composés, où l'effet répulsif du composant A est réduit par le composant B.

3. Compositions insecticides suivant la revendication 2, caractérisées en ce qu'elles contiennent, à côté d'acide para-hydroxyphénylacétique et/ou de ses sels et/ou de ses mélanges avec d'autres composés chimiques, des esters d'acide carbamique, des esters d'acides carboxyliques, des esters d'acide phosphonique, des esters d'acide phosphonique, des dérivés nitrométhyléniques, nitro-imino, cyanimino ou cyanométhyléniques.

4. Procédé de préparation de compositions insecticides suivant la revendication 2, dans lequel on mélange (i) de l'acide p-hydroxyphénylacétique et/ou ses sels et/ou (ii) ses mélanges avec d'autres composés chimiques avec des substances auxiliaires et/ou des diluants, en utilisant éventuellement des agents tensio-actifs.

5. Utilisation de compositions insecticides suivant la revendication 2 pour combattre des blattes.
